# EUROPEAN PATENT SPECIFICATION

(11) **EP 4 137 873 B1**
(45) Date of publication and mention of the grant of the patent: **09.12.2026**
(21) Application number: 21804282.8
(22) Date of filing: 07.05.2021
(51) Int. Cl.: G02B 27/01, B60K 35/22, B60K 35/23, B60K 35/40, B60K 35/60, B60K 35/65

(54) **HEAD-UP DISPLAY SYSTEM AND IMAGE DISPLAY METHOD BASED ON HEAD-UP DISPLAY SYSTEM**
HEAD-UP-ANZEIGESYSTEM UND BILDANZEIGEVERFAHREN AUF BASIS EINES HEAD-UP-ANZEIGESYSTEMS
SYSTÈME D'AFFICHAGE TÊTE HAUTE ET PROCÉDÉ D'AFFICHAGE D'IMAGE BASÉ SUR LE SYSTÈME D'AFFICHAGE TÊTE HAUTE

(30) Priority: 15.05.2020 CN 202010413886
(43) Date of publication of application: 22.02.2023
(73) Proprietor: Yinwang Intelligent Technologies Co., Ltd., Shenzhen, Guangdong 518129 (CN)
(72) Inventor: LI, Shimao, Shenzhen, Guangdong 518129 (CN); YAN, Yunfei, Shenzhen, Guangdong 518129 (CN); WANG, Jinlei, Shenzhen, Guangdong 518129 (CN)
(74) Representative: Gill Jennings & Every LLP
(86) International application number: PCT/CN2021/092081
(87) International publication number: WO 2021/227944

(56) References cited:
- WO-A1-2020/095612
- CN-A- 107 703 633
- CN-A- 107 703 633
- CN-A- 108 873 349
- CN-A- 110 794 580
- CN-U- 206 615 076
- JP-A- 2016 224 080
- US-A1- 2008 112 058
- US-A1- 2020 285 051
- US-A1- 2021 382 302

## Description

### TECHNICAL FIELD

This application relates to the field of vehicles, and in particular, to a head-up display system and an image display method based on the head-up display system.

### BACKGROUND

A head-up display (HUD) is an important technology for improving driving safety of a vehicle. It can project instrument information such as a driving speed and a fuel quantity and navigation information into a human eye by using components such as an imaging source and a mirror, and then establish a virtual image outside a windshield, so that a driver can observe driving information without lowering the head, thereby avoiding distracting attention, to improve driving safety and driving experience.

To ensure safety, an existing vehicle windshield is generally sandwich-shaped laminated glass, and two pieces of glass are bonded together by using a polymer film. When light projected by the HUD is incident on the windshield, the light may be reflected on two interfaces in contact with air inside and outside the windshield, and two virtual images are formed. The two virtual images may form a ghost image due to partial overlapping, which seriously affects HUD clarity.

CN107703633A discloses a windshield head-up display, and a method for suppressing a ghost image.

WO 2020/095612 A1 discloses a head-up display device mounted in a moving body and allowing an occupant to view a virtual image based on the reflected image of projection light from a projection unit.

### SUMMARY

Embodiments of the present invention disclose a head-up display system and an image display method based on the head-up display system, which can effectively eliminate visual interference to a human eye caused by a ghost image of two virtual images.

According to a first aspect, this application provides an HUD system in accordance with appended claim 1.

It should be noted that a resolution of the human eye may also be referred to as a distinguishable angle or an angular resolution of the human eye. Generally, a resolution of a normal human eye is 0.02°. It should be understood that a specific value of the resolution of the human eye is not limited in this application, provided that an included angle between the two virtual images and the human eye is small enough so that the human eye cannot distinguish between the two virtual images.

It should be noted that points at a same position on the first virtual image and the second virtual image are selected, for example, a center point in the first virtual image and a center point in the second virtual image. In addition, a position of the human eye is considered as a point. Further, a direction from the center point of the first virtual image to the human eye is denoted as a first direction, and a direction from the center point of the second virtual image to the human eye is denoted as a second direction. In this case, an included angle between the first direction and the second direction is the included angle between the two virtual images and the human eye.

In this implementation, the picture generated by the PGU forms two virtual images in front of the windshield. The included angle between the two virtual images and the human eye is related to a plurality of parameters (for example, the thickness of the windshield, the refractive index of the windshield, the coangle of the incident angle, on the first windshield surface, of the light beam directed by the optical element to the first windshield surface, and the distance between the first virtual image and the human eye). The included angle between the two virtual images and the human eye may be less than the resolution of the human eye by adjusting the foregoing listed parameters. Then, the human eye cannot distinguish between the two virtual images, so that visual interference to the human eye caused by a ghost image of the two virtual images can be effectively eliminated.

In some possible implementations, the HUD system further includes a first driving apparatus and/or a second driving apparatus. The first driving apparatus is configured to adjust a position of the PGU, so that the PGU is close to or away from the optical element. The second driving apparatus is configured to adjust a position of the optical element, so that the optical element is close to or away from the PGU.

In this implementation, a distance between the PGU and the optical element can be dynamically adjusted, so that the distance between the first virtual image and the human eye can be dynamically adjusted, to ensure that the included angle between the two virtual images and the human eye is less than the resolution of the human eye, which improves practicality of the solution.

In some possible implementations, the first driving apparatus is further configured to drive the PGU to rotate, to adjust a size of the coangle of the incident angle of the light beam on the first windshield surface. The second driving apparatus is further configured to drive the optical element to rotate, to adjust the size of the coangle of the incident angle of the light beam on the first windshield surface.

In this implementation, the size of the coangle of the incident angle of the light beam on the first windshield surface can be dynamically adjusted by using the driving apparatus, to ensure that the included angle between the two virtual images and the human eye is less than the preset angle, which further improves practicality of the solution.

In some possible implementations, the distance between the first virtual image and the human eye is equal to a sum of a first distance and a second distance. The first distance is a distance between the first virtual image and a target position on the first windshield surface, the second distance is a distance between the target position on the first windshield surface and the human eye, and the first distance is determined by a focal length of the optical element and a distance between the PGU and the optical element.

In this implementation, the distance between the first virtual image and the human eye can be changed by changing the first distance and/or the second distance. Specifically, the first distance may be changed by adjusting the focal length of the optical element and the distance between the PGU and the optical element. The second distance may be changed by adjusting a distance between an observer and the windshield. Scalability of this solution is improved.

The included angle is calculated by substituting the thickness of the windshield, the refractive index of the windshield, the coangle, and the distance between the first virtual image and the human eye into a formula.

The formula is as follows: $φ = arc sin \left[\frac{2 h}{D}\times \frac{sin \left(θ1\right)}{\sqrt{\frac{{n}^{2}}{cos {\left(θ1\right)}^{2}} - 1}}\right]$.

φ indicates the included angle, h indicates the thickness of the windshield, n indicates the refractive index of the windshield, D indicates the distance between the first virtual image and the human eye, and *θ*1 indicates the coangle.

In this implementation, a specific calculation manner of the included angle between the two virtual images and the human eye is provided, which improves implementability of this solution.

In some possible implementations, there is an interlayer between the first windshield surface and the second windshield surface, and the interlayer is configured to fasten the first windshield surface and the second windshield surface together. The optical element is a curved surface reflector, a lens, a liquid crystal on silicon (LCOS), or a diffractive optical element (DOE).

According to a second aspect, this application provides an image display method in accordance with appended claim 5.

In some possible implementations, the HUD system further includes a first driving apparatus and/or a second driving apparatus. The method further includes the following steps:

The first driving apparatus adjusts a position of the PGU, so that the PGU is close to or away from the optical element; and
the second driving apparatus adjusts a position of the optical element, so that the optical element is close to or away from the PGU.

In some possible implementations, the method further includes the following steps:

The first driving apparatus drives the PGU to rotate, to adjust a size of the coangle; and
the second driving apparatus drives the optical element to rotate, to adjust the size of the coangle.

In some possible implementations, the distance between the first virtual image and the human eye is equal to a sum of a first distance and a second distance. The first distance is a distance between the first virtual image and the target position on the first windshield surface, and the second distance is a distance between the target position on the first windshield surface and the human eye. The method further includes:
changing the first distance by adjusting a focal length of the optical element and a distance between the PGU and the optical element.

The included angle is calculated by substituting the thickness of the windshield, the refractive index of the windshield, the coangle, and the distance between the first virtual image and the human eye into a formula.

The formula is as follows: $φ = arc sin \left[\frac{2 h}{D}\times \frac{sin \left(θ1\right)}{\sqrt{\frac{{n}^{2}}{cos {\left(θ1\right)}^{2}} - 1}}\right]$.

φ indicates the included angle, h indicates the thickness of the windshield, n indicates the refractive index of the windshield, D indicates the distance between the first virtual image and the human eye, and *θ*1 indicates the coangle.

In some possible implementations, there is an interlayer between the first windshield surface and the second windshield surface, and the interlayer is configured to fasten the first windshield surface and the second windshield surface together; and the optical element is a curved surface reflector, a lens, an LCOS, or a DOE.

In this embodiment of this application, the picture generated by the PGU forms two virtual images in front of the windshield. The included angle between the two virtual images and the human eye is related to a plurality of parameters (for example, the thickness of the windshield, the refractive index of the windshield, the coangle of the incident angle, on the first windshield surface, of the light beam directed by the optical element to the first windshield surface, and the distance between the first virtual image and the human eye). The included angle between the two virtual images and the human eye may be less than the resolution of the human eye by adjusting the foregoing listed parameters. Then, the human eye cannot distinguish between the two virtual images, so that visual interference to the human eye caused by a ghost image of the two virtual images can be effectively eliminated.

### BRIEF DESCRIPTION OF DRAWINGS

FIG. 1 is a structural diagram of a first HUD system according to an embodiment of this application;
FIG. 2 is a schematic diagram of a parameter change in the first HUD system;
FIG. 3 is a schematic diagram of a parameter change in a second HUD system;
FIG. 4 is a schematic diagram of a parameter change in a third HUD system;
FIG. 5 is a schematic diagram of a parameter change in a fourth HUD system;
FIG. 6 is a structural diagram of the second HUD system according to an embodiment of this application;
FIG. 7 is a structural diagram of the third HUD system according to an embodiment of this application;
FIG. 8 is a structural diagram of the fourth HUD system according to an embodiment of this application; and
FIG. 9 is a schematic diagram of an image display method based on an HUD system according to an embodiment.

### DESCRIPTION OF EMBODIMENTS

Embodiments of this application provide a head-up display system and an image display method based on the head-up display system, which can effectively eliminate visual interference to a human eye caused by a ghost image of two virtual images. In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "comprise" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

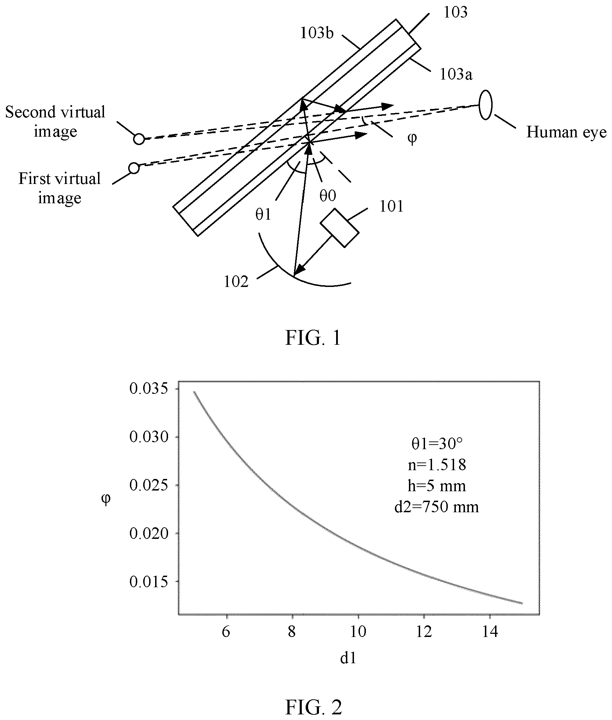

FIG. 1 is a structural diagram of a first head-up display (HUD) system according to an embodiment of this application. The HUD system includes a picture generation unit (PGU) 101, an optical element 102, and a windshield 103. The windshield 103 has two surfaces inside and outside: a first windshield surface 103a and a second windshield surface 103b. The picture generation unit 101 generates a picture, and projects a light beam corresponding to the picture to the optical element 102. The optical element 102 images the picture and directs the light beam to the first windshield surface 103a. Reflection and refraction happen when the light beam is incident on the first windshield surface 103a. A light beam refracted from the first windshield surface 103a is directed to the second windshield surface 103b. A light beam reflected from the first windshield surface 103a can be received by a human eye. It should be understood that after reflection by the first windshield surface 103a, the light beam forms a first virtual image with the picture. The second windshield surface 103b reflects the light beam refracted from the first windshield surface 103a, to the first windshield surface 103a. Further, the light beam reflected from the second windshield surface 103b is refracted on the first windshield surface 103a, and can be received by the human eye. It should be understood that after reflection by the second windshield surface 103b and refraction by the first windshield surface 103a, the light beam forms a second virtual image with the picture.

As shown in FIG. 1, imaging positions of the first virtual image and the second virtual image are different in space. Therefore, the first virtual image and the second virtual image may form a ghost image due to partial overlapping, thereby causing visual interference to an observer. To eliminate the ghost image seen by the human eye, an included angle between the two virtual images and the human eye needs to be less than a resolution of the human eye. That is, the imaging positions of the two virtual images in space need to be as close as possible, so that the human eye can no longer perceive the ghost image.

It should be noted that the included angle between the two virtual images and the human eye is affected by a plurality of parameters. Therefore, the plurality of parameters need to be adjusted, so that the included angle between the two virtual images and the human eye is less than the preset angle (for example, the resolution of the human eye). Details are described below.

Specifically, points at a same position on the first virtual image and the second virtual image are selected, for example, a center point in the first virtual image and a center point in the second virtual image. In addition, a position of the human eye is considered as a point. Further, a direction from the center point of the first virtual image to the human eye is denoted as a first direction, and a direction from the center point of the second virtual image to the human eye is denoted as a second direction. In this case, an included angle between the first direction and the second direction is the included angle between the two virtual images and the human eye.

The included angle may be specifically calculated by using the following formula: $φ = arc sin \left[\frac{2 h}{D}\times \frac{sin \left(θ1\right)}{\sqrt{\frac{{n}^{2}}{cos {\left(θ1\right)}^{2}} - 1}}\right] .$

φ indicates the included angle between the two virtual images and the human eye, h indicates a thickness of the windshield, n indicates a refractive index of the windshield, and D indicates a distance between the first virtual image and the human eye. *θ*1 indicates a coangle of an incident angle *θ*0, on the first windshield surface 103a, of the light beam directed by the optical element 102 to the first windshield surface 103a.

It should be noted that the distance D between the first virtual image and the human eye includes a distance d1 from the first virtual image to the first windshield surface 103a and a distance d2 from the first windshield surface 103a to the human eye. Specifically, the light beam directed by the optical element 102 to the first windshield surface is incident at a target position. In this case, a distance from the target position to the first virtual image is d1, and a distance from the target position to the human eye is d2.

It should be understood that, because of uncertainty in selecting an eye position, only an approximate value is calculated according to the foregoing formula. However, it can be determined that the included angle between the two virtual images and the human eye is determined by using the foregoing listed parameters. For example, the resolution of the human eye is 0.02° below, and several possible implementations are listed, so that the included angle between the two virtual images and the human eye is less than 0.02°.

FIG. 2 is a schematic diagram of a parameter change in the first HUD system. As shown in FIG. 2, a vertical coordinate indicates the included angle φ between the two virtual images and the human eye. A horizontal coordinate indicates the distance d1 from the first virtual image to the first windshield surface 103a. FIG. 2 is a schematic diagram in which when another parameter is determined, φ changes with d1. *θ*1=30°, n=1.518, h=5 mm, and d2=750 mm. It can be learned from FIG. 2 that d1 needs to be set to be greater than 10 m to meet that φ is less than 0.02°.

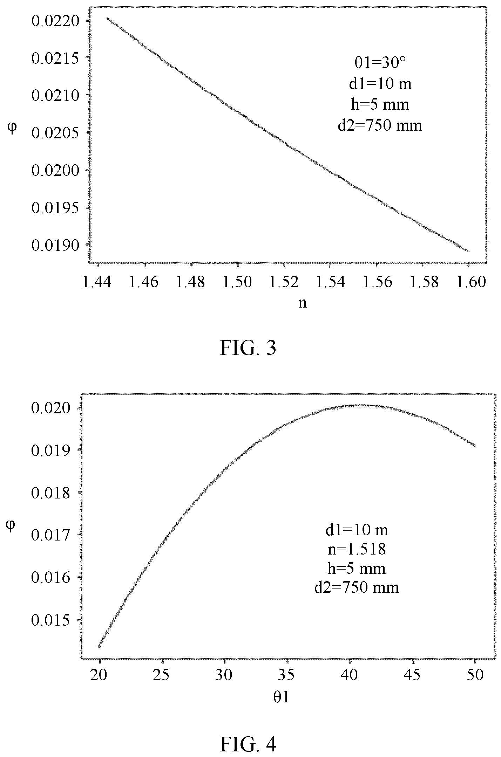

FIG. 3 is a schematic diagram of a parameter change in a second HUD system. As shown in FIG. 3, a vertical coordinate indicates the included angle φ between the two virtual images and the human eye. A horizontal coordinate indicates the refractive index n of the windshield. FIG. 3 is a schematic diagram in which when another parameter is determined, φ changes with n. *θ*1=30°, d1=10 m, h=5 mm, and d2=750 mm. It can be learned from FIG. 3 that n needs to be set to be greater than 1.44, and a specific value range may be 1.44 to 1.8.

FIG. 4 is a schematic diagram of a parameter change in a third HUD system. As shown in FIG. 4, a vertical coordinate indicates the included angle φ between the two virtual images and the human eye. A horizontal coordinate indicates *θ*1. FIG. 4 is a schematic diagram in which when another parameter is determined, φ changes with *θ*1. n=1.518, d1=10 m, h=5 mm, and d2=750 mm. Specifically, a value range of *θ*1 may be 20° to 80°.

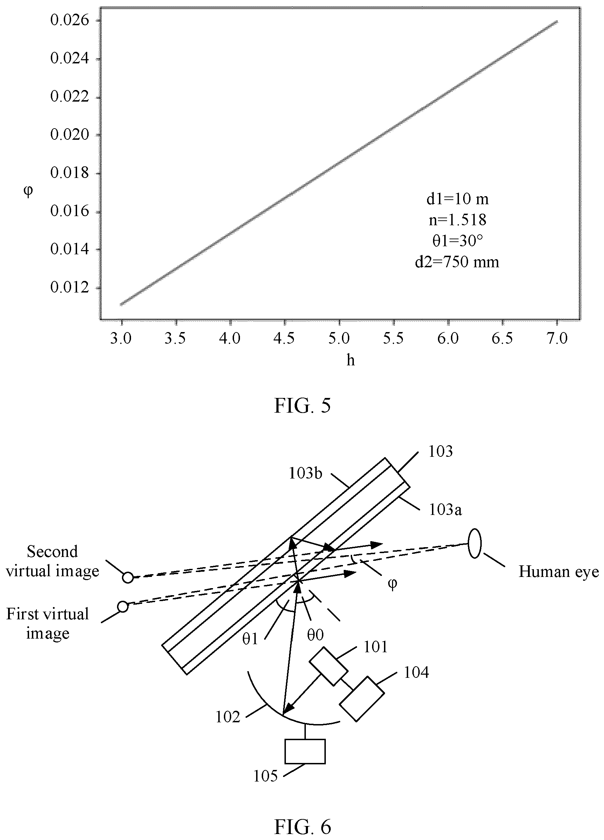

FIG. 5 is a schematic diagram of a parameter change in a fourth HUD system. As shown in FIG. 5, a vertical coordinate indicates the included angle φ between the two virtual images and the human eye. A horizontal coordinate indicates the thickness h of the windshield. FIG. 5 is a schematic diagram in which when another parameter is determined, φ changes with h. *θ*1=30°, d1=10 m, n=1.518, and d2=750 mm. It can be learned from FIG. 5 that h needs to be set to be less than 6 mm.

It may be understood that in actual application, specific values of the foregoing parameters include but are not limited to examples listed in FIG. 2 to FIG. 5. In addition, the resolution of the human eye includes but is not limited to 0.02° listed above. All cases in which a combination of the foregoing parameters can enable the included angle between the two virtual images and the human eye to be less than the preset angle fall within the scope of this application, except a case in which the foregoing parameters are preset. In some possible implementations, some of the parameters may be dynamically adjusted. The following provides several specific implementations.

First, adjust the foregoing parameter d1.

It may be understood that the foregoing parameter d1 is determined by a focal length of the optical element 102 and a distance between the picture generation unit 101 and the optical element 102. For example, if the distance between the picture generation unit 101 and the optical element 102 is less than the focal length of the optical element 102, a magnified virtual image may be obtained, and a distance between the virtual image and the human eye is relatively long. Therefore, the foregoing parameter d1 can be changed by adjusting the distance between the picture generation unit 101 and the optical element 102 and/or the focal length of the optical element 102.

FIG. 6 is a structural diagram of the second HUD system according to an embodiment of this application. Compared with the HUD system shown in FIG. 1, the HUD system shown in FIG. 6 further includes a first driving apparatus 104 and/or a second driving apparatus 105. Specifically, the first driving apparatus 104 is configured to adjust a position of the picture generation unit 101. The second driving apparatus 105 is configured to adjust a position of the optical element 102. The distance between the picture generation unit 101 and the optical element 102 can be changed by using the first driving apparatus 104 and/or the second driving apparatus 105, to adjust the foregoing parameter d1.

Optionally, for some optical elements 102 of specific structures, focal lengths of the optical elements 102 may alternatively be dynamically adjusted. For example, the optical element 102 is a liquid crystal on silicon (LCOS). A focal length of the LCOS may be changed by loading different modulation information on the LCOS, to adjust the foregoing parameter d1.

Second, adjust the foregoing parameter *θ*1.

Based on the HUD system shown in FIG. 6, the first driving apparatus 104 may drive the picture generation unit 101 to rotate, to change an angle of a light beam incident on the optical element 102, thereby implementing adjustment of the foregoing parameter *θ*1. Similarly, the second driving apparatus 105 may drive the optical element 102 to rotate, to change an angle of a light beam incident on the first windshield surface 103a, thereby implementing adjustment of the foregoing parameter *θ*1.

Third, adjust the foregoing parameter n.

Specifically, a temperature of the windshield 103 may be changed by using a temperature adjustment apparatus, to change the refractive index n of the windshield. Alternatively, a voltage loaded on the windshield 103 is changed by using a power supply to change the refractive index n of the windshield.

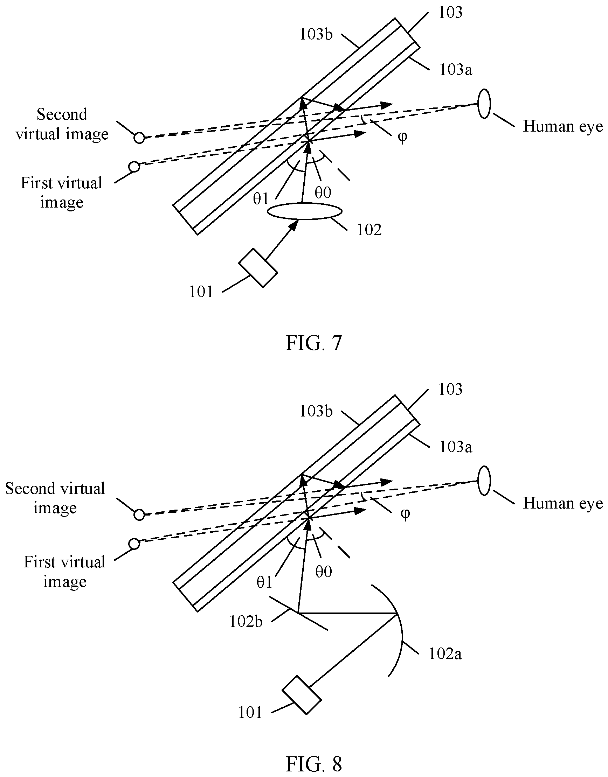

It should be noted that the optical element 102 may be a reflector, such as a freeform mirror, an aspherical mirror, a reflective LCOS, or a diffractive optical element (DOE). A specific optical path is shown in FIG. 1. Alternatively, the optical element 102 may be a lens, a transmissive liquid crystal display (LCD), or the like. A specific optical path is shown in FIG. 7. FIG. 7 is a structural diagram of the third HUD system according to an embodiment of this application.

Optionally, in the HUD system of this application, a plurality of optical elements 102 may further be disposed to form an imaging system, and a light beam from the picture generation unit 101 is directed to the first windshield surface 103a. A specific quantity of optical elements 102 is not limited in this application. For example, FIG. 8 is a structural diagram of the fourth HUD system according to an embodiment of this application. The optical element 102 includes a first reflection element 102a and a second reflection element 102b. The light beam transmitted by the picture generation unit 101 is successively reflected by the first reflection element 102a and the second reflection element 102b and then is directed to the first windshield surface 103a.

In some possible implementations, the windshield 103 is a sandwich structure, that is, the first windshield surface 103a and the second windshield surface 103b are bonded together by using a polymer.

In this embodiment of this application, the picture generated by the PGU forms two virtual images in front of the windshield. The included angle between the two virtual images and the human eye is related to a plurality of parameters (for example, the thickness of the windshield, the refractive index of the windshield, the coangle of the incident angle, on the first windshield surface, of the light beam directed by the optical element to the first windshield surface, and the distance between the first virtual image and the human eye). The included angle between the two virtual images and the human eye may be less than the preset angle (for example, the resolution of the human eye) by adjusting the foregoing listed parameters. Then, the human eye cannot distinguish between the two virtual images, so that visual interference to the human eye caused by a ghost image of the two virtual images can be effectively eliminated.

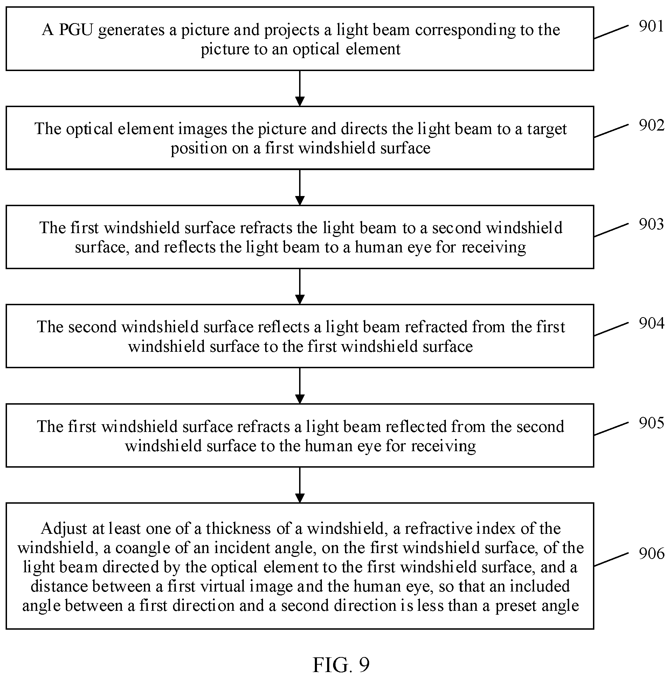

FIG. 9 is a schematic diagram of an image display method based on an HUD system according to an embodiment. The HUD system includes a windshield, a PGU, and an optical element, and the windshield includes a first windshield surface and a second windshield surface. The image display method includes:
901: The PGU generates a picture and projects a light beam corresponding to the picture to the optical element.
902: The optical element images the picture and directs the light beam to a target position on the first windshield surface.
903: The first windshield surface refracts the light beam to the second windshield surface, and reflects the light beam to a human eye for receiving.
Specifically, after reflection by the first windshield surface, the light beam forms a first virtual image with the picture.
904: The second windshield surface reflects a light beam refracted from the first windshield surface to the first windshield surface.
905: The first windshield surface refracts a light beam reflected from the second windshield surface to the human eye for receiving.

Specifically, after reflection by the second windshield surface and refraction by the first windshield surface, the light beam forms a second virtual image with the picture.

906: Adjust at least one of a thickness of the windshield, a refractive index of the windshield, a coangle of an incident angle, on the first windshield surface, of the light beam directed by the optical element to the first windshield surface, and a distance between the first virtual image and the human eye, so that an included angle between a first direction and a second direction is less than a preset angle.

Specifically, the first direction is a direction from the first virtual image to the human eye, and the second direction is a direction from the second virtual image to the human eye.

Optionally, in some possible implementations, the HUD system further includes a first driving apparatus and/or a second driving apparatus. The method further includes the following steps:
The first driving apparatus adjusts a position of the PGU, so that the PGU is close to or away from the optical element; and
the second driving apparatus adjusts a position of the optical element, so that the optical element is close to or away from the PGU.

Optionally, in some possible implementations, the method further includes the following steps:
The first driving apparatus drives the PGU to rotate, to adjust a size of the coangle; and
the second driving apparatus drives the optical element to rotate, to adjust the size of the coangle.

Optionally, in some possible implementations, the distance between the first virtual image and the human eye is equal to a sum of a first distance and a second distance. The first distance is a distance between the first virtual image and the target position on the first windshield surface, and the second distance is a distance between the target position on the first windshield surface and the human eye. The method further includes:
changing the first distance by adjusting a focal length of the optical element and a distance between the PGU and the optical element.

It should be noted that the HUD system in this embodiment may be specifically the HUD system in the embodiments shown in FIG. 1, FIG. 6, FIG. 7, and FIG. 8. Details are not described herein again.

It should be noted that the foregoing embodiments are merely used to describe the technical solutions of this application, but do not impose a limitation thereon. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A head-up display, HUD, system, wherein the HUD system comprises a windshield (103), a picture generation unit, PGU (101), and an optical element (102), wherein the windshield comprises a first windshield surface (103a) and a second windshield surface (103b);
the PGU is configured to generate a picture, and project a light beam corresponding to the picture to the optical element;
the optical element is configured to image the picture and direct the light beam to a target position on the first windshield surface;
the first windshield surface is configured to refract the light beam to the second windshield surface, and reflect the light beam to a human eye for receiving, wherein after reflection by the first windshield surface, the light beam forms a first virtual image with the picture;
the second windshield surface is configured to reflect a light beam refracted from the first windshield surface to the first windshield surface; and
the first windshield surface is further configured to refract a light beam reflected from the second windshield surface to the human eye for receiving, wherein after reflection by the second windshield surface and refraction by the first windshield surface, the light beam forms a second virtual image with the picture,
wherein the HUD system further comprises means for dynamically adjusting at least one of:
a distance d1 from the first virtual image to the first windshield surface (103a);
a coangle θ1 of an incident angle on the first windshield surface of the light beam directed by the optical element to the first windshield surface; and
a refractive index n of the windshield
so that an included angle calculated by using a thickness of the windshield, the refractive index n, the coangle θ1, and a distance between the first virtual image and the human eye is less than a resolution of the human eye,
wherein the included angle is an included angle between a first direction and a second direction, the first direction is a direction from the first virtual image to the human eye, and the second direction is a direction from the second virtual image to the human eye, wherein the included angle is calculated by substituting the thickness of the windshield, the refractive index of the windshield, the coangle, and the distance between the first virtual image and the human eye into a formula; and
the formula is $φ = arc sin \left[\frac{2 h}{D}\times \frac{sin \left(θ1\right)}{\sqrt{\frac{{n}^{2}}{cos {\left(θ1\right)}^{2}} - 1}}\right]$, wherein
φ indicates the included angle, h indicates the thickness of the windshield, n indicates the refractive index of the windshield, D indicates the distance between the first virtual image and the human eye, and *θ*1 indicates the coangle.

2. The HUD system according to claim 1, wherein the HUD system further comprises a first driving apparatus (104) and/or a second driving apparatus (105);
the first driving apparatus is configured to adjust a position of the PGU, so that the PGU is close to or away from the optical element; and
the second driving apparatus is configured to adjust a position of the optical element, so that the optical element is close to or away from the PGU.

3. The HUD system according to claim 2, wherein the first driving apparatus is further configured to drive the PGU to rotate, to adjust a size of the coangle; and
the second driving apparatus is further configured to drive the optical element to rotate, to adjust the size of the coangle.

4. The HUD system according to any one of claims 1 to 3, wherein the distance between the first virtual image and the human eye is equal to a sum of a first distance and a second distance, the first distance is a distance between the first virtual image and the target position on the first windshield surface, the second distance is a distance between the target position on the first windshield surface and the human eye, and the first distance is determined by a focal length of the optical element and a distance between the PGU and the optical element.

5. An image display method based on an HUD system, wherein the HUD system comprises a windshield (103), a PGU (101), and an optical element (102), wherein the windshield comprises a first windshield surface (103a) and a second windshield surface (103b), and wherein the HUD system further comprises means for dynamically adjusting at least one of:
a distance d1 from the first virtual image to the first windshield surface (103a);
a coangle θ1 of an incident angle on the first windshield surface of the light beam directed by the optical element to the first windshield surface; and
a refractive index n of the windshield,
and the method comprises:
generating, by the PGU, a picture, and projecting a light beam corresponding to the picture to the optical element;
imaging, by the optical element, the picture, and directing the light beam to a target position on the first windshield surface;
refracting, by the first windshield surface, the light beam to the second windshield surface, and reflecting the light beam to a human eye for receiving, wherein after reflection by the first windshield surface, the light beam forms a first virtual image with the picture;
reflecting, by the second windshield surface, a light beam refracted from the first windshield surface to the first windshield surface;
refracting, by the first windshield surface, a light beam reflected from the second windshield surface to the human eye for receiving, wherein after reflection by the second windshield surface and refraction by the first windshield surface, the light beam forms a second virtual image with the picture; and
dynamically adjusting at least one of the distance d1, the refractive index n, and the coangle θ1 so that an included angle calculated by using a thickness of the windshield, the refractive index n, the coangle θ1, and a distance between the first virtual image and the human eye is less than a resolution of the human eye,
wherein the included angle is an included angle between a first direction and a second direction, the first direction is a direction from the first virtual image to the human eye, and the second direction is a direction from the second virtual image to the human eye, wherein the included angle is calculated by substituting the thickness of the windshield, the refractive index of the windshield, the coangle, and the distance between the first virtual image and the human eye into a formula; and
the formula is $φ = arc sin \left[\frac{2 h}{D}\times \frac{sin \left(θ1\right)}{\sqrt{\frac{{n}^{2}}{cos {\left(θ1\right)}^{2}} - 1}}\right]$, wherein
φ indicates the included angle, h indicates the thickness of the windshield, n indicates the refractive index of the windshield, D indicates the distance between the first virtual image and the human eye, and *θ*1 indicates the coangle.

6. The method according to claim 5, wherein the HUD system further comprises a first driving apparatus (104) and/or a second driving apparatus (105); and the method further comprises:
adjusting, by the first driving apparatus, a position of the PGU, so that the PGU is close to or away from the optical element; and
adjusting, by the second driving apparatus, a position of the optical element, so that the optical element is close to or away from the PGU.

7. The method according to claim 6, wherein the method further comprises:
driving, by the first driving apparatus, the PGU to rotate, to adjust a size of the coangle; and
driving, by the second driving apparatus, the optical element to rotate, to adjust the size of the coangle.

8. The method according to any one of claims 5 to 7, wherein the distance between the first virtual image and the human eye is equal to a sum of a first distance and a second distance, the first distance is a distance between the first virtual image and the target position on the first windshield surface, and the second distance is a distance between the target position on the first windshield surface and the human eye; and the method further comprises:
changing the first distance by adjusting a focal length of the optical element and a distance between the PGU and the optical element.

## Patentansprüche

1. Head-up-Display-System, HUD-System, wobei das HUD-System eine Windschutzscheibe (103), eine Bilderzeugungseinheit, PGU (101), und ein optisches Element (102) umfasst, wobei die Windschutzscheibe eine erste Windschutzscheibenoberfläche (103a) und eine zweite Windschutzscheibenoberfläche (103b) umfasst;
wobei die PGU konfiguriert ist zum Erzeugen eines Bildes und zum Projizieren eines Lichtstrahls, der dem Bild entspricht, auf das optische Element;
wobei das optische Element konfiguriert ist zum Abbilden des Bildes und zum Richten des Lichtstrahls auf eine Zielposition auf der ersten Windschutzscheibenoberfläche;
wobei die erste Windschutzscheibenoberfläche konfiguriert ist zum Brechen des Lichtstrahls auf die zweite Windschutzscheibenoberfläche und zum Reflektieren des Lichtstrahls für ein Empfangen in einem menschlichen Auge, wobei der Lichtstrahl nach der Reflexion von der ersten Windschutzscheibenoberfläche mit dem Bild ein erstes virtuelles Bild bildet;
wobei die zweite Windschutzscheibenoberfläche konfiguriert ist zum Reflektieren eines Lichtstrahls, der von der ersten Windschutzscheibenoberfläche gebrochen wurde, zu der ersten Windschutzscheibenoberfläche; und
wobei die erste Windschutzscheibenoberfläche ferner konfiguriert ist zum Brechen eines Lichtstrahls, der von der zweiten Windschutzscheibenoberfläche für ein Empfangen in einem menschlichen Auge reflektiert wird, wobei der Lichtstrahl nach der Reflexion durch die zweite Windschutzscheibenoberfläche und der Brechung durch die erste Windschutzscheibenoberfläche mit dem Bild ein zweites virtuelles Bild bildet,
wobei das HUD-System ferner Elemente für ein dynamisches Anpassen von mindestens einem umfasst von:
einem Abstand d1 von dem ersten virtuellen Bild zu der ersten Windschutzscheibenoberfläche (103a);
einem Komplementärwinkel θ1 eines Einfallswinkels auf die erste Windschutzscheibenoberfläche des Lichtstrahls, der durch das optische Element auf die erste Windschutzscheibenoberfläche gerichtet wird; und
einem Brechungsindex n der Windschutzscheibe,
sodass ein eingeschlossener Winkel, der unter Verwendung einer Dicke der Windschutzscheibe, des Brechungsindex n, des Komplementärwinkels θ1 und eines Abstands zwischen dem ersten virtuellen Bild und dem menschlichen Auge berechnet wird, geringer als eine Auflösung des menschlichen Auges ist,
wobei der eingeschlossene Winkel ein eingeschlossener Winkel zwischen einer ersten Richtung und einer zweiten Richtung ist, wobei die erste Richtung eine Richtung von dem ersten virtuellen Bild zu dem menschlichen Auge ist und die zweite Richtung eine Richtung von dem zweiten virtuellen Bild zu dem menschlichen Auge ist, wobei der eingeschlossene Winkel berechnet wird, indem die Dicke der Windschutzscheibe, der Brechungsindex der Windschutzscheibe, der Komplementärwinkel und der Abstand zwischen dem ersten virtuellen Bild und dem menschlichen Auge in eine Formel eingesetzt werden; und
wobei die Formel $φ = arc sin \left[\frac{2 h}{D}\times \frac{sin \left(θ1\right)}{\sqrt{\frac{{n}^{2}}{cos {\left(θ1\right)}^{2}} - 1}}\right]$ ist, wobei
φ den eingeschlossenen Winkel anzeigt, h die Dicke der Windschutzscheibe anzeigt, n den Brechungsindex der Windschutzscheibe anzeigt, D den Abstand zwischen dem ersten virtuellen Bild und dem menschlichen Auge anzeigt und θ1 den Komplementärwinkel anzeigt.

2. HUD-System nach Anspruch 1, wobei das HUD-System ferner eine erste Antriebseinrichtung (104) und/oder eine zweite Antriebseinrichtung (105) umfasst;
wobei die erste Antriebseinrichtung konfiguriert ist, um eine Position der PGU so anzupassen, dass sich die PGU nahe oder fern von dem optischen Element befindet; und
wobei die zweite Antriebseinrichtung konfiguriert ist, um eine Position des optischen Elements so anzupassen, dass sich das optische Element nahe oder fern von der PGU befindet.

3. HUD-System nach Anspruch 2, wobei die erste Antriebseinrichtung ferner konfiguriert ist, um die PGU zum Drehen anzutreiben, um eine Größe des Komplementärwinkels anzupassen; und
wobei die zweite Antriebseinrichtung ferner konfiguriert ist, um das optische Element zum Drehen anzutreiben, um die Größe des Komplementärwinkels anzupassen.

4. HUD-System nach einem der Ansprüche 1 bis 3, wobei der Abstand zwischen dem ersten virtuellen Bild und dem menschlichen Auge gleich einer Summe aus einem ersten Abstand und einem zweiten Abstand ist, wobei der erste Abstand ein Abstand zwischen dem ersten virtuellen Bild und der Zielposition auf der ersten Windschutzscheibenoberfläche ist, wobei der zweite Abstand ein Abstand zwischen der Zielposition auf der ersten Windschutzscheibenoberfläche und dem menschlichen Auge ist, und wobei der erste Abstand durch eine Brennweite des optischen Elements und einen Abstand zwischen der PGU und dem optischen Element bestimmt wird.

5. Bildanzeigeverfahren basierend auf einem HUD-System, wobei das HUD-System eine Windschutzscheibe (103), eine PGU (101) und ein optisches Element (102) umfasst, wobei die Windschutzscheibe eine erste Windschutzscheibenoberfläche (103a) und eine zweite Windschutzscheibenoberfläche (103b) umfasst und wobei das HUD-System ferner Elemente für ein dynamisches Anpassen von mindestens einem umfasst von:
einem Abstand d1 von dem ersten virtuellen Bild zu der ersten Windschutzscheibenoberfläche (103a);
einem Komplementärwinkel θ1 eines Einfallswinkels auf die erste Windschutzscheibenoberfläche des Lichtstrahls, der durch das optische Element auf die erste Windschutzscheibenoberfläche gerichtet wird; und
einem Brechungsindex n der Windschutzscheibe,
und wobei das Verfahren umfasst:
Erzeugen, durch die PGU, eines Bildes und Projizieren eines Lichtstrahls, der dem Bild entspricht, auf das optische Element;
Abbilden, durch das optische Element, des Bildes und Richten des Lichtstrahls auf eine Zielposition auf der ersten Windschutzscheibenoberfläche;
Brechen, durch die erste Windschutzscheibenoberfläche, des Lichtstrahls auf die zweite Windschutzscheibenoberfläche und Reflektieren des Lichtstrahls für ein Empfangen in einem menschlichen Auge, wobei der Lichtstrahl nach der Reflexion durch die erste Windschutzscheibenoberfläche mit dem Bild ein erstes virtuelles Bild bildet;
Reflektieren, durch die zweite Windschutzscheibenoberfläche, eines Lichtstrahls, der von der ersten Windschutzscheibenoberfläche gebrochen wurde, zu der ersten Windschutzscheibenoberfläche;
Brechen, durch die erste Windschutzscheibenoberfläche, eines Lichtstrahls, der von der zweiten Windschutzscheibenoberfläche für ein Empfangen in einem menschlichen Auge reflektiert wird, wobei der Lichtstrahl nach der Reflexion durch die zweite Windschutzscheibenoberfläche und der Brechung durch die erste Windschutzscheibenoberfläche mit dem Bild ein zweites virtuelles Bild bildet; und
dynamisches Anpassen mindestens eines von dem Abstand d1, dem Brechungsindex n und dem Komplementärwinkel θ1, sodass ein eingeschlossener Winkel, der unter Verwendung einer Dicke der Windschutzscheibe, des Brechungsindex n, des Komplementärwinkels θ1 und eines Abstands zwischen dem ersten virtuellen Bild und dem menschlichen Auge berechnet wird, geringer als eine Auflösung des menschlichen Auges ist,
wobei der eingeschlossene Winkel ein eingeschlossener Winkel zwischen einer ersten Richtung und einer zweiten Richtung ist, wobei die erste Richtung eine Richtung von dem ersten virtuellen Bild zu dem menschlichen Auge ist und die zweite Richtung eine Richtung von dem zweiten virtuellen Bild zu dem menschlichen Auge ist, wobei der eingeschlossene Winkel berechnet wird, indem die Dicke der Windschutzscheibe, der Brechungsindex der Windschutzscheibe, der Komplementärwinkel und der Abstand zwischen dem ersten virtuellen Bild und dem menschlichen Auge in eine Formel eingesetzt werden; und
wobei die Formel $φ = arc sin \left[\frac{2 h}{D}\times \frac{sin \left(θ1\right)}{\sqrt{\frac{{n}^{2}}{cos {\left(θ1\right)}^{2}} - 1}}\right]$ ist, wobei
φ den eingeschlossenen Winkel anzeigt, h die Dicke der Windschutzscheibe anzeigt, n den Brechungsindex der Windschutzscheibe anzeigt, D den Abstand zwischen dem ersten virtuellen Bild und dem menschlichen Auge anzeigt und θ1 den Komplementärwinkel anzeigt.

6. Verfahren nach Anspruch 5, wobei das HUD-System ferner eine erste Antriebseinrichtung (104) und/oder eine zweite Antriebseinrichtung (105) umfasst; und wobei das Verfahren ferner umfasst:
Anpassen, durch die erste Antriebseinrichtung, einer Position der PGU, sodass sich die PGU nahe oder fern von dem optischen Element befindet; und
Anpassen, durch die zweite Antriebseinrichtung, einer Position des optischen Elements, sodass sich das optische Element nahe oder fern von der PGU befindet.

7. Verfahren nach Anspruch 6, wobei das Verfahren ferner umfasst:
Antreiben, durch die erste Antriebseinrichtung, der PGU zum Drehen, um eine Größe des Komplementärwinkels anzupassen; und
Antreiben, durch die zweite Antriebseinrichtung, des optischen Elements zum Drehen, um die Größe des Komplementärwinkels anzupassen.

8. Verfahren nach einem der Ansprüche 5 bis 7, wobei der Abstand zwischen dem ersten virtuellen Bild und dem menschlichen Auge gleich einer Summe aus einem ersten Abstand und einem zweiten Abstand ist, wobei der erste Abstand ein Abstand zwischen dem ersten virtuellen Bild und der Zielposition auf der ersten Windschutzscheibenoberfläche ist, und wobei der zweite Abstand ein Abstand zwischen der Zielposition auf der ersten Windschutzscheibenoberfläche und dem menschlichen Auge ist, und wobei das Verfahren ferner umfasst:
Ändern des ersten Abstands, indem eine Brennweite des optischen Elements und ein Abstand zwischen der PGU und dem optischen Element angepasst werden.

## Revendications

1. Système d'affichage tête haute, Head-Up Display HUD, dans lequel le système de HUD comprend un pare-brise (103), une unité de génération de vue, Picture Generation Unit, PGU (101), et un élément optique (102), dans lequel le pare-brise comprend une première surface de pare-brise (103a) et une seconde surface de pare-brise (103b) ;
la PGU est configurée pour générer une vue, et projeter un faisceau de lumière correspondant à la vue vers l'élément optique ;
l'élément optique est configuré pour imager la vue et diriger le faisceau de lumière vers une position cible sur la première surface de pare-brise ;
la première surface de pare-brise est configurée pour réfracter le faisceau de lumière vers la seconde surface de pare-brise, et réfléchir le faisceau de lumière vers un œil humain pour la réception, dans lequel, après la réflexion par la première surface de pare-brise, le faisceau de lumière forme une première image virtuelle avec la vue ;
la seconde surface de pare-brise est configurée pour réfléchir un faisceau de lumière réfracté depuis la première surface de pare-brise vers la première surface de pare-brise ; et
la première surface de pare-brise est en outre configurée pour réfracter un faisceau de lumière réfléchi depuis la seconde surface de pare-brise vers l'œil humain pour la réception, dans lequel, après la réflexion par la seconde surface de pare-brise et la réfraction par la première surface de pare-brise, le faisceau de lumière forme une seconde image virtuelle avec la vue,
dans lequel le système de HUD comprend en outre des moyens pour ajuster dynamiquement au moins un élément parmi :
une distance d1 depuis la première image virtuelle jusqu'à la première surface de pare-brise (103a) ;
un co-angle θ1 d'un angle incident sur la première surface de pare-brise du faisceau de lumière dirigé par l'élément optique vers la première surface de pare-brise ; et
un indice de réfraction n du pare-brise
de telle sorte qu'un angle inclus calculé en utilisant une épaisseur du pare-brise, l'indice de réfraction n, le co-angle θ1, et une distance entre la première image virtuelle et l'œil humain est inférieur à une résolution de l'œil humain,
dans lequel l'angle inclus est un angle inclus entre une première direction et une seconde direction, la première direction est une direction depuis la première image virtuelle jusqu'à l'œil humain, et la seconde direction est une direction depuis la seconde image virtuelle jusqu'à l'œil humain, dans lequel l'angle inclus est calculé en substituant l'épaisseur du pare-brise, l'indice de réfraction du pare-brise, le co-angle, et la distance entre la première image virtuelle et l'œil humain dans une formule ; et
la formule est $φ = arc sin \left[\frac{2 h}{D}\times \frac{sin \left(θ1\right)}{\sqrt{\frac{{n}^{2}}{cos {\left(θ1\right)}^{2}} - 1}}\right]$,
φ indiquant l'angle inclus, h indiquant l'épaisseur du pare-brise, n indiquant l'indice de réfraction du pare-brise, D indiquant la distance entre la première image virtuelle et l'œil humain, et θ1 indiquant le co-angle.

2. Système de HUD selon la revendication 1, dans lequel le système de HUD comprend en outre un premier appareil d'entraînement (104) et/ou un second appareil d'entraînement (105) ;
le premier appareil d'entraînement est configuré pour ajuster une position de la PGU, de telle sorte que la PGU est proche ou éloignée de l'élément optique ; et
le second appareil d'entraînement est configuré pour ajuster une position de l'élément optique, de telle sorte que l'élément optique est proche ou éloigné de la PGU.

3. Système de HUD selon la revendication 2, dans lequel le premier appareil d'entraînement est en outre configuré pour entraîner la PGU pour qu'elle entre en rotation, pour ajuster une taille du co-angle ; et
le second appareil d'entraînement est en outre configuré pour entraîner l'élément optique pour qu'il entre en rotation, pour ajuster la taille du co-angle.

4. Système de HUD selon l'une quelconque des revendications 1 à 3, dans lequel la distance entre la première image virtuelle et l'œil humain est égale à une somme d'une première distance et d'une seconde distance, la première distance est une distance entre la première image virtuelle et la position cible sur la première surface de pare-brise, la seconde distance est une distance entre la position cible sur la première surface de pare-brise et l'œil humain, et la première distance est déterminée par une longueur focale de l'élément optique et une distance entre la PGU et l'élément optique.

5. Procédé d'affichage d'image sur la base d'un système de HUD, dans lequel le système de HUD comprend un pare-brise (103), une PGU (101), et un élément optique (102), dans lequel le pare-brise comprend une première surface de pare-brise (103a) et une seconde surface de pare-brise (103b), et dans lequel le système de HUD comprend en outre des moyens pour ajuster dynamiquement au moins un élément parmi :
une distance d1 depuis la première image virtuelle jusqu'à la première surface de pare-brise (103a) ;
un co-angle θ1 d'un angle incident sur la première surface de pare-brise du faisceau de lumière dirigé par l'élément optique vers la première surface de pare-brise ; et
un indice de réfraction n du pare-brise,
et le procédé comprend les faits suivants :
générer, par la PGU, une vue, et projeter un faisceau de lumière correspondant à la vue vers l'élément optique ;
imager, par l'élément optique, la vue, et diriger le faisceau de lumière vers une position cible sur la première surface de pare-brise ;
réfracter, par la première surface de pare-brise, le faisceau de lumière vers la seconde surface de pare-brise, et réfléchir le faisceau de lumière vers un œil humain pour la réception, dans lequel, après la réflexion par la première surface de pare-brise, le faisceau de lumière forme une première image virtuelle avec la vue ;
réfléchir, par la seconde surface de pare-brise, un faisceau de lumière réfracté depuis la première surface de pare-brise vers la première surface de pare-brise ;
réfracter, par la première surface de pare-brise, un faisceau de lumière réfléchi depuis la seconde surface de pare-brise vers l'œil humain pour la réception, dans lequel, après la réflexion par la seconde surface de pare-brise et la réfraction par la première surface de pare-brise, le faisceau de lumière forme une seconde image virtuelle avec la vue ; et
ajuster dynamiquement au moins un élément parmi la distance d1, l'indice de réfraction n, et le co-angle θ1 de telle sorte qu'un angle inclus calculé en utilisant une épaisseur du pare-brise, l'indice de réfraction n, le co-angle θ1, et une distance entre la première image virtuelle et l'œil humain est inférieur à une résolution de l'œil humain,
dans lequel l'angle inclus est un angle inclus entre une première direction et une seconde direction, la première direction est une direction depuis la première image virtuelle jusqu'à l'œil humain, et la seconde direction est une direction depuis la seconde image virtuelle jusqu'à l'œil humain, dans lequel l'angle inclus est calculé en substituant l'épaisseur du pare-brise, l'indice de réfraction du pare-brise, le co-angle, et la distance entre la première image virtuelle et l'œil humain dans une formule ; et
la formule est $φ = arc sin \left[\frac{2 h}{D}\times \frac{sin \left(θ1\right)}{\sqrt{\frac{{n}^{2}}{cos {\left(θ1\right)}^{2}} - 1}}\right]$,
φ indiquant l'angle inclus, h indiquant l'épaisseur du pare-brise, n indiquant l'indice de réfraction du pare-brise, D indiquant la distance entre la première image virtuelle et l'œil humain, et θ1 indiquant le co-angle.

6. Procédé selon la revendication 5, dans lequel le système de HUD comprend en outre un premier appareil d'entraînement (104) et/ou un second appareil d'entraînement (105) ; et le procédé comprend en outre les faits suivants :
ajuster, par le premier appareil d'entraînement, une position de la PGU, de telle sorte que la PGU est proche ou éloignée de l'élément optique ; et
ajuster, par le second appareil d'entraînement, une position de l'élément optique, de telle sorte que l'élément optique est proche ou éloigné de la PGU.

7. Procédé selon la revendication 6, dans lequel le procédé comprend en outre les faits suivants :
entraîner, par le premier appareil d'entraînement, la PGU pour qu'elle entre en rotation, pour ajuster une taille du co-angle ; et
entraîner, par le second appareil d'entraînement, l'élément optique pour qu'il entre en rotation, pour ajuster la taille du co-angle.

8. Procédé selon l'une quelconque des revendications 5 à 7, dans lequel la distance entre la première image virtuelle et l'œil humain est égale à une somme d'une première distance et d'une seconde distance, la première distance est une distance entre la première image virtuelle et la position cible sur la première surface de pare-brise, et la seconde distance est une distance entre la position cible sur la première surface de pare-brise et l'œil humain ; et le procédé comprend en outre :
le fait de changer la première distance en ajustant une longueur focale de l'élément optique et une distance entre la PGU et l'élément optique.
